# EUROPÄISCHE PATENTSCHRIFT

(11) **EP 3 487 746 B1**
(45) Veröffentlichungstag und Bekanntmachung des Hinweises auf die Patenterteilung: **02.09.2020**
(21) Anmeldenummer: 17762100.0
(22) Anmeldetag: 04.09.2017
(51) Int. Cl.: B61L 15/00, B61L 27/00, H04L 29/06, H04W 80/04

(54) **VERFAHREN ZUR KAPSELUNG DER ANSTEUERUNG VON MOBILFUNKGERÄTEN IN ETCS-BAHNFAHRZEUGEN UND ETCS-BAHNFAHRZEUG**
METHOD FOR ENCAPSULATING THE ACTUATION OF MOBILE RADIOS IN ETCS RAIL VEHICLES, AND ETCS RAIL VEHICLE
PROCÉDÉ D'ENCAPSULATION DE LA COMMANDE D'APPAREILS RADIOTÉLÉPHONIQUES MOBILES DANS DES VÉHICULES FERROVIAIRES À SYSTÈME ETCS ET VÉHICULE FERROVIAIRE À SYSTÈME ETCS

(30) Priorität: 20.09.2016 DE 102016217997
(43) Veröffentlichungstag der Anmeldung: 29.05.2019
(73) Patentinhaber: Siemens Mobility GmbH, 81739 München (DE)
(72) Erfinder: KENDELBACHER, Detlef, 13129 Berlin (DE); STEIN, Fabrice, 12621 Berlin (DE)
(86) Internationale Anmeldenummer: PCT/EP2017/072072
(87) Internationale Veröffentlichungsnummer: WO 2018/054667

(56) Entgegenhaltungen:
- EP-A1- 2 279 926
- WO-A1-2009/030659
- DE-A1- 10 319 904
- DE-A1-102007 041 177
- UIC: "Top Level Domain for ETCS in PS-mode;RT(14)054017_ETCS_Top_Level_Domain ", ETSI DRAFT; RT(14)054017_ETCS_TOP_LEVEL_DOMAIN, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. RT, 6. Juli 2014 (2014-07-06), Seiten 1-4, XP014206174, [gefunden am 2014-07-06]
- MYSLIVEC M: "Paketvermittelnde Systeme und Schnittstellen für GSM-R", SIGNAL + DRAHT, DVV, Bd. 103, Nr. 11, 1. November 2011 (2011-11-01), Seiten 13-15, XP001569641, ISSN: 0037-4997
- FISCHER P H: "GSM-R - EIN DIGITALES FUNKNETZ FUER DIE EUROPAEISCHEN EISENBAHNEN GSM-R - A DIGITAL RADIO NETWORK FOR THE EUROPEAN RAILWAYS", ELEKTROTECHNIK UND INFORMATIONSTECHNIK, SPRINGER VERLAG, WIEN, AT, Bd. 116, Nr. 9, 1. Januar 1999 (1999-01-01), Seiten 504-508, XP000924170, ISSN: 0932-383X

## Beschreibung

Das European Train Communications System (ETCS) stellt ein standardisiertes Verfahren für die Zugsicherung bereit, welches für den europäischen und internationalen Bahnverkehr zunehmend Anwendung findet. Die signaltechnisch gesicherte Datenübertragung erfolgt in ETCS-Level 2 und 3 über digitale GSM (Global System for Mobile Communications)-Mobilfunknetze. Dabei wurden bisher für die ETCS-Kommunikation zwischen Bahnfahrzeugen und Streckenzentralen ausschließlich verbindungsorientierte Datendienste, sog. circuit switched (CS)-Dienste, in der Norm vorgesehen. Die vom Normierungsgremium UNISIG in Subset 37 definierten ETCS-Übertragungsdienste und - protokolle sollen zukünftig auf paketorientierte Datendienste, sog. packet switched (PS)-Dienste, erweitert werden, um die Effizienz der für die Bahnen bereitgestellten Funkfrequenzbänder zu verbessern. Mit diesem Schritt wird das bisherige CS-Verfahren um IP-basierte Kommunikation auf der Basis von GPRS ergänzt.

Mit Einführung des neuen Übertragungsstandards werden ETCS-Bahnfahrzeuge und -Streckenzentralen neben der CS-Kommunikation auch die PS-Kommunikation nutzen, wobei vorrangig die PS-Kommunikation eingesetzt werden soll.

Die Aktivität zum Verbindungsaufbau und damit die Auswahl von CS- oder PS-Kommunikation erfolgt durch das ETCS-Bahnfahrzeug. Bei Nutzung von PS-Diensten wird die zuständige Streckenzentrale nicht mehr mittels einer Mobilfunkrufnummer, sondern mittels einer individuellen IP-Adresse kontaktiert. Diese muss vom ETCS-Bahnfahrzeug mit Hilfe von bahnspezifischem DNS (Domain Name Service) zunächst ermittelt werden.

Im ETCS-Bahnfahrzeug werden für PS-Kommunikation durch das Normierungsgremium UNISIG folgende Protokolle vorgesehen:
1. 3G TS 27.010 - eine Multiplexschicht für die Modemansteuerung, mit der Mobilfunkgeräte für CS- oder verschiedene parallele PS-Dienste genutzt werden können,
2. PPP - ein Netzwerkprotokoll zur Einwahl in GPRS und Ermittlung von IP-Adressen (z.B. von DNS-Servern) und
3. TCP/IP - ein IP-basiertes fehlerkorrigierendes Übertragungsprotokoll.

Die WO 2009/030659 A1 beschreibt in diesem Zusammenhang ein Verfahren zur Kommunikationsadressierung mobiler Teilnehmer bei Verwendung von paketorientierter Datenübertragung für Bahnanwendungen.

Die Einführung von PS-Diensten stellt die Hersteller von ETCS-Bahnfahrzeugen bzw. deren Ausrüstungen vor mehrere Probleme:
1. Bei der PS-Kommunikation wird kein Ende-zu-Ende gesicherter Mobilfunkkanal bereitgestellt. Datenpakete können jederzeit aus unterschiedlichen Quellen im ETCS-Bahnfahrzeug eintreffen. Damit sind neue Möglichkeiten für Hackerangriffe gegeben, gegen die zusätzliche Sicherheits-Maßnahmen erforderlich sein können.
2. Es ist möglich, dass für unterschiedliche Mobilfunknetze in benachbarten Ländern gleiche IP-Adressen für DNS-Server, ETCS-Streckenzentralen oder das ETCS-Bahnfahrzeug selbst verwendet werden. Des weiteren ist es möglich, dass eine für die PS-Kommunikation zu verwendende IP-Adresse bereits in einer IP-basierten fahrzeugseitigen Infrastruktur verwendet wird. Das bedeutet, dass ein ETCS-Bahnfahrzeug insbesondere bei Ländergrenzenübergang zeitweise parallel zu unterschiedlichen ortsfesten Zielen mit ggf. identischen IP-Adressen kommunizieren können muss. Sofern in der fahrzeugseitigen ETCS-Einrichtung mit einem Rechner zwei Mobilfunkgeräte angesteuert werden, können diese Anforderungen mit einem Standard-IP-Protokoll im ETCS-Steuerrechner des ETCS-Bahnfahrzeugs zu Problemen führen.
3. Der UNISIG Standard definiert kommunikationsspezifische Parametereinstellungen für das IP-basierte fehlerkorrigierende Übertragungsprotokoll TCP/IP an der Schnittstelle zum GPRS-Mobilfunkgerät. Diese Einstellungen werden global im Steuerrechner wirksam und wirken sich gegebenenfalls störend auf die TCP/IP-Kommunikation an anderen Rechnerschnittstellen aus.

Zur Unterstützung bei der Lösung dieser Probleme dient erfindungsgemäß ein Verfahren zum Betreiben eines ETCS-Bahnfahrzeugs mit mindestens zwei an einen ETCS-Steuerrechner des Bahnfahrzeugs angeschlossenen GSM-R-Mobilfunkgeräten bei einer paketorientierten Datenübertragung mit den EURORADIO-Protokollen 3G TS 27.010 der Multiplexschicht für die Modemansteuerung, PPP dem Netzwerkprotokoll und TCP/IP dem IP-basierten fehlerkorrigierenden Übertragungsprotokoll, bei dem die Ansteuerung der mindestens zwei GSM-R-Mobilfunkgeräte durch den Steuerrechner mit den EURORADIO-Protokollen 3G TS 27.010, PPP und TCP/IP gekapselt wird, wobei je GSM-R-Mobilfunkgerät mindestens die EURORADIO-Protokolle 3G TS 27.010, PPP und TCP/IP in einer im ETCS-Steuerrechner bereitgestellten virtuellen Ablaufumgebung als virtuelle Maschine mit einer protokolltechnischen Entkopplung der ablaufenden TCP/IP-Protokolle ablaufen.

Ein wesentlicher Vorteil des erfindungsgemäßen Verfahrens besteht darin, dass die zur Ansteuerung der Mobilfunkschnittstelle bei der paketorientierten Kommunikation erforderlichen Protokolle 3G TS 27.010, PPP und TCP/IP gegenüber der übrigen Funktionalität des ETCS-Steuerrechners gekapselt werden. Für jede Mobilfunkschnittstelle wird eine eigene Kapsel vorgesehen, in der die zur paketorientierten Kommunikation verwendeten Protokolle isoliert werden. Infolge der Kapselung laufen das TCP/IP-Protokoll und die unterlagerten Protokolle PPP und 3G TS 27.010 lokal innerhalb einer Kapsel ab und bedienen eine Schnittstelle zum Mobilfunkgerät. Damit lassen sich für unterschiedliche Mobilfunknetze in benachbarten Ländern gleiche IP-Adressen bei der Kommunikation von zwei Mobilfunkgeräten mit zwei unterschiedlichen Streckenzentralen während der Fahrt des ETCS-Bahnfahrzeugs gleichzeitig nutzen. Das bedeutet, dass ein ETCS-Bahnfahrzeug insbesondere beim Ländergrenzübergang vorteilhafterweise zeitweise parallel zu unterschiedlichen ortsfesten Zielen mit gegebenenfalls identischen IP-Adressen kommunizieren kann.

Darüber hinaus ist es möglich, dass eine für die paketorientierte Kommunikation zu verwendende IP-Adresse bereits in einer IP-basierten fahrzeugseitigen Infrastruktur verwendet wird.

Ferner ist das erfindungsgemäße Verfahren insofern störungsfrei, als im UNISIG-Standard definiert kommunikationsspezifische Parametereinstellungen für TCP/IP sich an der Schnittstelle zum Mobilfunkgerät nicht störend auf die TCP/IP-Kommunikation an anderen Rechnerschnittstellen auswirken, obwohl diese Parametereinstellungen global im Steuerrechner wirksam sind.

Zusätzlich ergibt sich der Vorteil, dass Hackerangriffe auf das ETCS-Fahrzeug infolge der Kapselung erschwert werden, da die IP-Adresse des ETCS-Steuerrechners im GSM-R-Mobilfunknetz nicht sichtbar und deshalb nicht mehr direkt angreifbar ist.

Vorteilhaft hat es sich bei dem erfindungsgemäßen Verfahren erwiesen, für die Bereitstellung einer virtuellen Ablaufumgebung marktübliche Programme zu verwenden.

Ferner hat es sich als vorteilhaft herausgestellt, dass bei Kapselung mit Virtualisierung auch unterschiedliche Betriebssysteme in den Kapseln und im ETCS Steuerrechnereingesetzt werden können.

In dieser Form des erfindungsgemäßen Verfahrens erfolgt die Kopplung der Kapseln an den ETCS-Steuerrechner über eine LAN- oder eine TTY-Brigde. Die LAN-Bridge stellt einen Übertragungsdienst für Datagramm Frames bereit, der die Kommunikation zwischen dem ETCS-Steuerrechner (Host) und der jeweiligen Kapsel ermöglicht. Über die LAN-Bridge laufen frei wählbare Übertragungsprotokolle für den DATAGRAM-Transport ab, beispielsweise das genannte LAN-Protokoll IEEE 802.3. Bei Bedarf können weitere Protokollschichten auf der LAN-Bridge vorgesehen werden, beispielsweise um die Integrität der Datenübertragung zu prüfen und Übertragungsfehler zu korrigieren. Das TCP/IP-Protokoll sollte dagegen nicht für die LAN-Bridge verwendet werden, um auch dessen Parameter kapseln zu können.

Die virtuelle Maschine jeder Kapsel enthält neben den Kommunikationsprotokollen eine GATEWAY-Funktion zur Ankopplung an den ETCS-Hostrechner via LAN-Bridge.

Alternativ kann statt einer LAN-Bridge auch eine TTY-Bridge mit entsprechender Protokolladaption für die Anbindung der Kapseln an den ETCS-Steuerrechner verwendet werden.

Eine TTY-Bridge stellt dabei innerhalb der virtuellen Umgebung der Kapsel ein serielles Interface zum ETCS-Steuerrechner zur Verfügung.

Weiterhin wird es als vorteilhaft betrachtet, wenn die serielle Übertragung von Steuer- und Anwenderdaten zwischen den Kapseln und den seriellen Schnittstellen der GSM-R Mobilfunkgeräte durch jeweils eine TTY-Bridge erfolgt.

In einer weiteren Variante des erfindungsgemäßen Verfahrens können in einem linuxbasierten ETCS-Steuerrechner statt virtueller Maschinen die aus LINUX bekannte Funktionalität der Network NameSpaces zur Isolierung verschiedener parallel ablaufender TCP/IP-Protokolle verwendet werden.

Zur Lösung der oben angegebenen Aufgabe ist auch ein Verfahren zum Betreiben eines ETCS-Bahnfahrzeugs mit mindestens zwei an einen ETCS-Steuerrechner des Bahnfahrzeugs angeschlossenen GSM-R-Mobilfunkgeräten bei einer paketorientierten Datenübertragung mit den EURORADIO-Protokollen 3G TS 27.010 der Multiplexschicht für die Modemansteuerung, PPP dem Netzwerkprotokoll und TCP/IP dem IP-basierten fehlerkorrigierenden Übertragungsprotokoll geeignet, bei dem erfindungsgemäß die Ansteuerung der mindestens zwei GSM-R-Mobilfunkgeräte durch den Steuerrechner mit den EURORADIO-Protokollen 3G 27.010, PPP und TCP/IP gekapselt wird, wobei je GSM-R-Mobilfunkgerät mindestens die EURORADIO-Protokolle 3G 27.010, PPP und TCP/IP in zwei mit dem ETCS-Steuerrechner und den GSM-R-Mobilfunkgeräten gekoppelten Mikrorechnern mit einer protokolltechnischen Entkopplung der ablaufenden TCP/IP-Protokolle sowie deren verwendeter Protokollparameter in den Kapseln und im Steuerrechner ablaufen.

Bei dieser Ausführungsform des erfindungsgemäßen Verfahrens wird somit im Rahmen einer Hardware-Lösung zur Kapselung jeweils ein Mikrorechner für die Ansteuerung der ETCS-Mobilfunkgeräte eingesetzt; selbstverständlich ist auch die Verwendung von Einplatinenrechnern möglich. Dabei sind marktgängige Systeme, wie Embedded-Linux-Arm-Boards, vorteilhaft einsetzbar.

In dieser Lösungsvariante erfolgt die Kopplung der Mikrorechner zum ETCS-Steuerrechner beispielsweise durch eine physische Ethernet Verbindung, auf welcher frei wählbare Übertragungsprotokolle für den Datagrammtransport ablaufen.

Die Kopplung zum Mobilfunkgerät erfolgt über ein UART Interface mit serieller TTY-Ankopplung.

Die für PS-Kommunikation vorgesehenen Protokolle 3G TS 27.010, PPP und TCP/IP laufen auf dem separaten Mikrorechner unabhängig vom ETCS-Steuerrechner des Fahrzeugs.
Für zwei ETCS-Mobilfunkgeräte würden in dieser Anordnung ein oder zwei zusätzliche Mikrorechner in der ETCS-Fahrzeugeinrichtung vorgesehen werden.

Im Übrigen ergeben sich sinngemäß dieselben Vorteile, wie sie bei der eingangs beschriebenen Ausführungsform des erfindungsgemäßen Verfahrens aufgeführt sind.

Ferner besteht bei den beiden Ausführungsformen des erfindungsgemäßen Verfahrens die vorteilhafte Möglichkeit, dass der Umfang der gekapselten Protokolle um weitere Protokollschichten für eine paketorientierte Kommunikation erweitert wird.

Ferner erscheint es vorteilhaft, wenn Gateway-Funktionen und/oder Diagnosefunktionen in die Kapseln integriert werden.

Außerdem ist bei dem erfindungsgemäßen Verfahren die vorteilhafte Möglichkeit gegeben, dass die in den Kapseln ablaufenden Protokolle 3G 27.010, PPP und TCP/IP für die paketorientierte Datenübertragung bei der Verwendung von verbindungsorientierten Datendiensten transparent geschaltet werden.

Ferner ist es möglich, dass eines der zwei GSM-R-Mobilfunkgeräte in herkömmlicher Weise kapselfrei angesteuert wird.

Die Erfindung betrifft ferner ein ETCS-Bahnfahrzeug mit mindestens zwei an einen Steuerrechner des ETCS-Bahnfahrzeugs angeschlossenen GSM-R-Mobilfunkgeräten mit einer paketorientierten Datenübertragung mit den EURORADIO-Protokollen 3G TS 27.010 der Multiplexschicht für die Modemansteuerung, PPP dem Netzwerkprotokoll und TCP/IP dem IP-basierten fehlerkorrigierenden Übertragungsprotokoll und stellt sich die Aufgabe, bei einem solchen Bahnfahrzeug einen einwandfreien Betrieb auch dann zu gewährleisten, wenn beispielsweise in benachbarten Ländern gleiche IP-Adressen für DNS-Server, ETCS-Streckenzentralen oder das ETCS-Bahnfahrzeug selbst verwendet werden.

Zur Lösung dieser Aufgabe ist das ETCS-Bahnfahrzeug geeignet, die Ansteuerung der mindestens zwei GSM-R-Mobilfunkgeräte durch den Steuerrechner mit den EURORADIO-Protokollen 3G 27.010, PPP und TCP/IP zu kapseln, wobei je GSM-R-Mobilfunkgerät mindestens die EURORADIO-Protokolle 3G 27.010, PPP und TCP/IP im ETCS-Steuerrechner in einer dafür bereitgestellten virtuellen Ablaufumgebung als virtuelle Maschine mit einer protokolltechnischen Entkopplung der ablaufenden TCP/IP-Protokolle ablaufen.

Bei einer anderen vorteilhaften Ausführungsform des erfindungsgemäßen ETCS-Bahnfahrzeugs mit mindestens zwei an einen Steuerrechner des Bahnfahrzeugs angeschlossenen GSM-R-Mobilfunkgeräten mit einer paketorientierten Datenübertragung mit EURORADIO-Protokollen 3G TS 27.010 der Multiplexschicht für die Modemansteuerung, PPP dem Netzwerkprotokoll und TCP/IP dem IP-basierten fehlerkorrigierenden Übertragungsprotokoll ist das ETCS-Bahnfahrzeug geeignet, die Ansteuerung der mindestens zwei GSM-R-Mobilfunkgeräte durch den Steuerrechner mit den EURORADIO-Protokollen 3G 27.010, PPP und TCP/IP zu kapseln, wobei je GSM-R-Mobilfunkgerät mindestens die EURORADIO-Protokolle 3G 27.010, PPP und TCP/IP in zwei mit dem ETCS-Steuerrechner und den GSM-R-Mobilfunkgeräten gekoppelten Mikrorechnern mit einer protokolltechnischen Entkopplung der ablaufenden TCP/IP-Protokolle ablaufen.

Bei diesen beiden Ausführungsformen eines ETCS-Bahnfahrzeugs ergeben sich sinngemäß dieselben Vorteile, wie sie oben zu den beiden Ausführungsformen des erfindungsgemäßen Verfahrens aufgeführt sind.

Zur weiteren Erläuterung ist in
- Fig. 1: ein Ausführungsbeispiel einer On-Board-Unit eines ECTS-Bahnfahrzeugs zur Durchführung des erfindungsgemäßen Verfahrens, in
- Fig. 2: ein Ausführungsbeispiel eines für das erfindungsgemäße Verfahren geeigneten Steuerrechners mit zwei virtuellen Maschinen in der On-Board-Unit und in
- Fig. 3: ein weiteres Ausführungsbeispiel eines für das erfindungsgemäße Verfahren geeigneten Steuerrechners mit zwei Mikrorechnern
gezeigt.

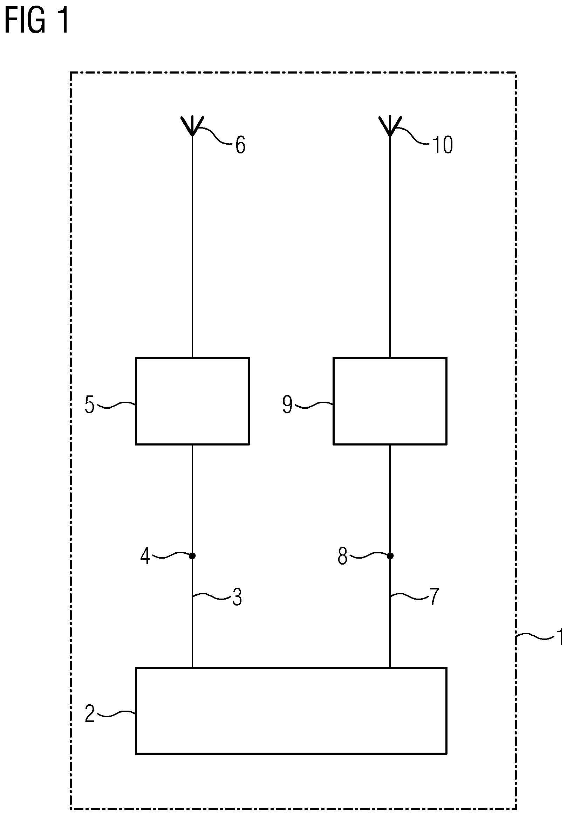

In Fig. 1 ist eine On-Board-Unit 1 eines im Übrigen nicht weiter dargestellten ETCS-Bahnfahrzeugs wiedergegeben. In der On-Board-Unit 1 befindet sich ein Steuerrechner 2, der über eine Kommunikationsverbindung 3 an einer Schnittstelle 4 mit einem GSM-R-Mobilfunkgerät 5 verbunden ist, das ausgangsseitig eine Mobilfunkantenne 6 aufweist. Außerdem ist über eine weitere Kommunikationsverbindung 7 und eine Schnittstelle 8 an den Steuerrechner 2 ein weiteres GSM-R-Mobilfunkgerät 9 angeschlossen, das ebenfalls ausgangsseitig mit einer Mobilfunkantenne 10 ausgerüstet ist.

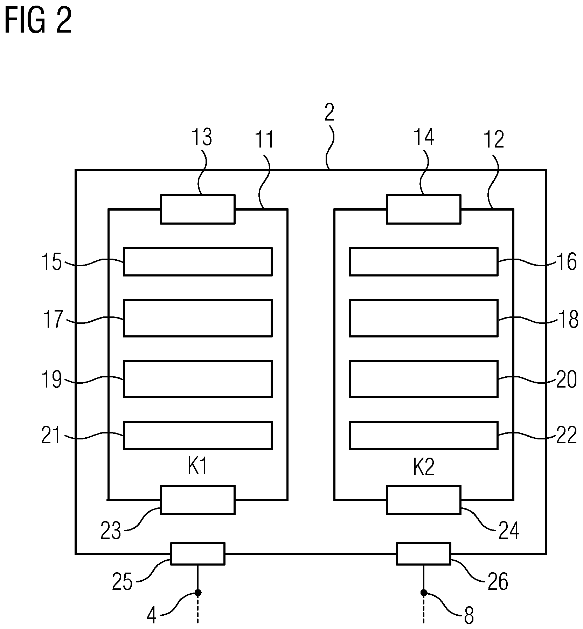

Der Steuerrechner 2 mit seinen für die Erfindung wesentlichen Elementen ist im Detail in Fig. 2 wiedergegeben. Es ist zu erkennen, dass der Steuerrechner 2 eine erste virtuelle Maschine 11 und eine weitere virtuelle Maschine 12 aufweist. Jede der beiden virtuellen Maschinen 11 und 12 ist über jeweils eine LAN-Bridge 13 bzw. 14 mit den hier nicht gezeigten übrigen Funktionalitäten des ETCS-Steuerrechners 2 verbunden. Die jeweilige LAN-Bridge 13 bzw. 14 stellt einen Übertragungsdienst für DATAGRAM-Frames bereit, der die Kommunikation zwischen dem Steuerrechner 2 und der jeweiligen Kapsel K1 bzw. K2 (siehe unten) ermöglicht.

In den virtuellen Maschinen 11 und 12 laufen über jeweils einen Gateway-Prozess 15 bzw. 16 die TCP/IP-Protokolle 17 bzw. 18 ab, denen die Programme PPP 19 und 20 sowie das Protokoll 3G TS 27.010 21 bzw. 22 folgen.

Ausgangsseitig sind die virtuellen Maschinen 11 bzw. 12 über jeweils eine TTY-Bridge 23 bzw. 24 an eine serielle Schnittstelle 4 bzw. 8 mit dem GSM-R-Mobilfunkgerät 5 bzw. 9 verbunden (siehe Fig. 1).

Abschließend ist noch anzumerken, dass der Umfang der gekapselten Funktionen und Protokolle flexibel festgelegt werden kann. Neben den Protokollen zur Ansteuerung der ETCS-Mobilfunkgeräte bei paketorientierter Kommunikation können weitere Protokolle und Funktionen innerhalb der Kapseln angeordnet werden. Beispielsweise gehören dazu Teile des EURORADIO-Protokollstapels für verbindungsorientierte Kommunikation, EURORADIO-Funktion zur Netzwerksteuerung oder Diagnosefunktionen.

Mit der erfolgten Kapselung sind die TCP/IP-Protokolle in den Kapseln und im ETCS-Steuerrechner 2 voneinander entkoppelt. Dadurch kann in jeder Kapsel und im ETCS-Steuerrechner 2 unabhängig voneinander mit Quell- und Ziel-IP-Adressen gearbeitet werden. Die IP-Adressen des ETCS-Steuerrechners 2 sind ebenfalls frei wählbar. Beide GPRS-Kommunikationsverbindungen über die Mobilfunkgeräte 5 und 9 können die gleiche oder eine unterschiedliche eigene IP-Adresse besitzen und gleichzeitig zu unterschiedlichen Instanzen mit identischen IP-Zieladressen kommunizieren. Die Einstellung der TCP/IP-Parameter für die paketorientierte Kommunikation ist infolge der Kapselung lokal auf die jeweilige Kapsel beschränkt. Für jede Kapsel und den ETCS-Steuerrechner 2 können unterschiedliche TCP/IP-Parameter eingestellt werden.

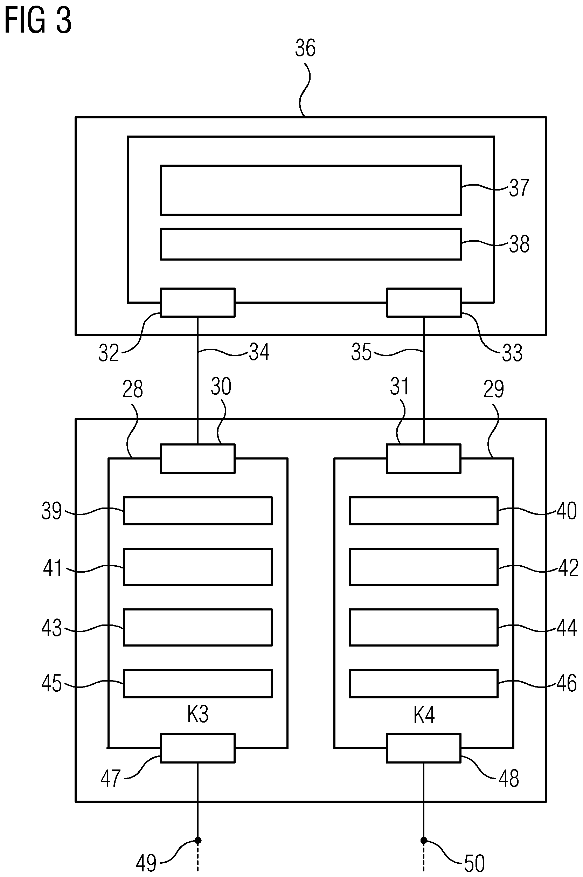

Eine Ausführungsform des erfindungsgemäßen Verfahrens mit zwei Mikrorechnern sieht ähnlich aus, wie das in Fig. 2 gezeigte Verfahren. Hierbei sind allerdings - wie Fig. 3 zeigt - anstelle der virtuellen Maschinen 11 und 12 zwei Mikrorechner 28 und 29 verwendet, in denen LAN-Schnittstellen 30 und 31 bzw. 32 und 33 über Ethernet-Verbindungen 34 und 35 die Kopplung zum Steuerrechner 36 entsprechend den LAN-Bridges 13 und 14 nach Fig. 2 übernehmen; im Steuerrechner 36 läuft außer seiner Software 37 ein TCP/IP-Protokoll 38 ab.

In den Mikrorechnern 28 und 29 laufen Gateway-Prozesse 39 und 40 entsprechend den Gateway-Prozessen 15 und 16 nach Fig.2 und TCP/IP-Protokolle 41 und 42 entsprechend den Protokollen 17 und 18 gemäß Fig. 2 ab. Darauf folgen dann auch hier PPP-Programme 43 und 44 entsprechend den PPP-Programmen 19 und 20 nach Fig. 2 und auch die Protokolle 3G TS 27.010 als Protokolle 45 und 46 entsprechend den Programmen 21 und 22 gemäß Fig. 2 unter Bildung von Kapseln K3 und K4. Mit den TTY-Schnittstellen 47 und 48 erfolgt wie bei dem Ausführungsbeispiel nach Fig. 2 ausgangsseitig die Kopplung der Kapseln K3 und K4 an den Steuerrechner 36. Dadurch werden die Mobilfunkgeräte 5 und 9 gemäß Fig. 1 über serielle Verbindungen 49 und 50 mit den TTY-Schnittstellen 47 und 48 mit dem Steuerrechner 36 verbunden.

## Patentansprüche

1. Verfahren zum Betreiben eines ETCS (European Train Control System)-Bahnfahrzeugs mit mindestens zwei an einen ETCS-Steuerrechner (2) des Bahnfahrzeugs angeschlossenen GSM-R-Mobilfunkgeräten (5,9) bei einer paketorientierten Datenübertragung mit den EURORADIO-Protokollen 3G TS 27.010 (21,22) der Multiplexschicht für die Modemansteuerung, PPP (19,20) dem Netzwerkprotokoll und TCP/IP (17,18) dem IP-basierten fehlerkorrigierenden Übertragungsprotokoll,
**dadurch gekennzeichnet, dass**
die Ansteuerung der mindestens zwei GSM-R-Mobilfunkgeräte (5,9) durch den ETCS-Steuerrechner (2) mit den EURORADIO-Protokollen 3G 27.010 (21,22), PPP (19,20) und TCP/IP (17,18) gekapselt wird, wobei je GSM-R-Mobilfunkgerät (5,9) mindestens die EURORADIO-Protokolle 3G 27.010 (21,22), PPP (19,20) und TCP/IP (17,18) in einer im ETCS-Steuerrechner (2) bereitgestellten virtuellen Ablaufumgebung als virtuelle Maschine (11,12) mit einer protokolltechnischen Entkopplung der ablaufenden TCP/IP-Protokolle (17,18) ablaufen.

2. Verfahren nach Anspruch 1,
**dadurch gekennzeichnet, dass** die im ETCS-Steuerrechner durchgeführte Kapselung der EURORADIO-Protokolle 3G 27.010, PPP und TCP/IP durch Verwendung von LINUX Network Namespaces realisiert wird.

3. Verfahren nach Anspruch 1 oder 2,
**dadurch gekennzeichnet, dass**
Kapseln mit unterschiedlichen Betriebssystemen und Protokollfunktionalitäten für die zwei GSM-R-Mobilfunkgeräte eingesetzt werden.

4. Verfahren nach einem der vorangehenden Ansprüche,
**dadurch gekennzeichnet, dass**
für ein weiteres GSM-R-Mobilfunkgerät zur Kapselbildung ein Mikrocontroller bereitgestellt wird.

5. Verfahren nach Anspruch 3,
**dadurch gekennzeichnet, dass**
die Kopplung der Kapseln (K1,K2) an den ETCS-Steuerrechner (2) über eine LAN- oder eine TTY-Bridge (13,14) erfolgt.

6. Verfahren zum Betreiben eines ETCS (European Train Control System)-Bahnfahrzeugs mit mindestens zwei an einen ETCS-Steuerrechner (36) des ETCS-Bahnfahrzeugs angeschlossenen GSM-R-Mobilfunkgeräten (5,9) bei einer paketorientierten Datenübertragung mit den EURORADIO-Protokollen 3G TS 27.010 (45,46) der Multiplexschicht für die Modemansteuerung, PPP (43,44) dem Netzwerkprotokoll und TCP/IP (41,42) dem IP-basierten fehlerkorrigierenden Übertragungsprotokoll,
**dadurch gekennzeichnet, dass**
die Ansteuerung der mindestens zwei GSM-R-Mobilfunkgeräte (5,9) durch den ETCS-Steuerrechner (36) mit den EURORADIO-Protokollen 3G 27.010 (45,46), PPP (43,44) und TCP/IP (41,42) gekapselt (K3,K4) wird, wobei je GSM-R-Mobilfunkgerät (5,9) mindestens die EURORADIO-Protokolle 3G 27.010 (45,46), PPP (43,44) und TCP/IP (41,42) in zwei mit dem ETCS-Steuerrechner (36) gekoppelten Mikrorechnern (30,31) mit einer protokolltechnischen Entkopplung der ablaufenden TCP/IP-Protokolle (41,42) ablaufen.

7. Verfahren nach einem der vorangehenden Ansprüche,
**dadurch gekennzeichnet, dass**
die serielle Übertragung von Steuer- und Anwenderdaten von und zu seriellen Schnittstellen (4,8) der GSM-R-Mobilfunkgeräte (5,9) durch TTY-Bridges (47,48) erfolgt.

8. Verfahren nach einem der vorangehenden Ansprüche,
**dadurch gekennzeichnet, dass**
der Umfang der gekapselten Protokolle um weitere Protokollschichten für eine paketorientierte Kommunikation erweitert wird.

9. Verfahren nach einem der vorangehenden Ansprüche,
**dadurch gekennzeichnet, dass**
Gateway-Funktionen (15,16;39,40) und/oder Diagnosefunktionen in die Kapseln (K1,K2;K3,K4) integriert werden.

10. Verfahren nach einem der vorangehenden Ansprüche,
**dadurch gekennzeichnet, dass**
die in den Kapseln ablaufenden Protokolle 3G 27.010, PPP und TCP/IP für die paketorientierte Datenübertragung bei der Verwendung von verbindungsorientierten Datendiensten transparent geschaltet werden.

11. Verfahren nach einem der vorangehenden Ansprüche,
**dadurch gekennzeichnet, dass**
eines der zwei GSM-R-Mobilfunkgeräte in herkömmlicher Weise kapselfrei angesteuert wird.

12. ETCS (European Train Control System)-Bahnfahrzeug mit mindestens zwei an einen ETCS-Steuerrechner (2) des Bahnfahrzeugs angeschlossenen GSM-R-Mobilfunkgeräten (5,9) mit einer paketorientierten Datenübertragung mit den EURORADIO-Protokollen 3G TS 27.010 (21,22) der Multiplexschicht für die Modemansteuerung, PPP (19,20) dem Netzwerkprotokoll und TCP/IP (17,18) dem IP-basierten fehlerkorrigierenden Übertragungsprotokoll,
**dadurch gekennzeichnet, dass**
das ETCS-Bahnfahrzeug geeignet ist, die Ansteuerung der mindestens zwei GSM-R-Mobilfunkgeräte (5,9) durch den ETCS-Steuerrechner (2) mit den EURORADIO-Protokollen 3G 27.010 (21,22), PPP (19,20) und TCP/IP (17,18) zu kapseln, wobei je GSM-R-Mobilfunkgerät (5,9) mindestens die EURORADIO-Protokollen 3G 27.010 (21,22), PPP (19,20) und TCP/IP (17,18) im ETCS-Steuerrechner (2) in einer dafür bereitgestellten virtuellen Ablaufumgebung als virtuelle Maschine (11,12) mit einer protokolltechnischen Entkopplung der ablaufenden TCP/IP-Protokolle (17,18) ablaufen.

13. ETCS (European Train Control System)-Bahnfahrzeug mit mindestens zwei an einen ETCS-Steuerrechner (36) des ETCS-Bahnfahrzeugs angeschlossenen GSM-R-Mobilfunkgeräten (5,9) mit einer paketorientierten Datenübertragung mit den EURORADIO-Protokollen 3G TS 27.010 (45,46) der Multiplexschicht für die Modemansteuerung, PPP (43,44) dem Netzwerkprotokoll und TCP/IP (41,42) dem IP-basierten fehlerkorrigierenden Übertragungsprotokoll,
**dadurch gekennzeichnet, dass**
das ETCS-Bahnfahrzeug geeignet ist, die Ansteuerung der mindestens zwei GSM-R-Mobilfunkgeräte (5,9) durch den ETCS-Steuerrechner (36) mit den EURORADIO-Protokollen 3G 27.010 (45,46), PPP (43,44) und TCP/IP (41,42) zu kapseln (K3,K4), wobei je GSM-R-Mobilfunkgerät (5,9) mindestens die EURORADIO-Protokollen 3G 27.010 (45,46), PPP (43,44) und TCP/IP (41,42) in zwei mit dem ETCS-Steuerrechner (36) gekoppelten Mikrorechnern (28,29) mit einer protokolltechnischen Entkopplung der ablaufenden TCP/IP-Protokolle (41,42) ablaufen.

## Claims

1. Method for operating an ETCS (European Train Control System) railway vehicle with at least two GSM-R mobile wireless devices (5,9) connected to an ETCS control computer (2) of the railway vehicle in a packet-oriented data transfer with the EURORADIO protocols 3G TS 27.010 (21,22), the multiplex layer for modem actuation, PPP (19,20), the network protocol, and TCP/IP (17,18), the IP-based error-correcting transfer protocol,
**characterised in that**
the actuation of the at least two GSM-R mobile wireless devices (5,9) is encapsulated by way of the ETCS control computer (2) with the EURORADIO protocols 3G 27.010 (21,22), PPP (19,20) and TCP/IP (17,18), wherein for each GSM-R mobile wireless device (5,9) at least the EURORADIO protocols 3G 27.010 (21,22), PPP (19,20) and TCP/IP (17,18) run in a virtual runtime environment provided in the ETCS control computer (2) acting as a virtual machine (11,12) with the running TCP/IP protocols (17,18) being isolated from a protocol-related perspective.

2. Method according to claim 1,
**characterised in that**
the encapsulation of the EURORADIO protocols 3G 27.010, PPP and TCP/IP carried out in the ETCS control computer is realised through the use of LINUX network namespaces.

3. Method according to claim 1 or 2,
**characterised in that**
capsules with different operating systems and protocol functionalities are used for the two GSM-R mobile wireless devices.

4. Method according to one of the preceding claims,
**characterised in that**
a microcontroller is provided for capsule formation for a further GSM-R mobile wireless device.

5. Method according to claim 3,
**characterised in that**
the coupling of the capsules (K1,K2) to the ETCS control computer (2) takes place via a LAN or a TTY bridge (13,14).

6. Method for operating an ETCS (European Train Control System) railway vehicle with at least two GSM-R mobile wireless devices (5,9) connected to an ETCS control computer (36) of the ETCS railway vehicle in a packet-oriented data transfer with the EURORADIO protocols 3G TS 27.010 (45,46), the multiplex layer for modem actuation, PPP (43,44), the network protocol, and TCP/IP (41,42), the IP-based error-correcting transfer protocol,
**characterised in that**
the actuation of the at least two GSM-R mobile wireless devices (5,9) is encapsulated (K3,K4) by way of the ETCS control computer (36) with the EURORADIO protocols 3G 27.010 (45,46), PPP (43,44) and TCP/IP (41,42), wherein for each GSM-R mobile wireless device (5,9) at least the EURORADIO protocols 3G 27.010 (45,46), PPP (43,44) and TCP/IP (41,42) run in two microcomputers (30,31) coupled to the ETCS control computer (36) with the running TCP/IP protocols (41,42) being isolated from a protocol-related perspective.

7. Method according to one of the preceding claims,
**characterised in that**
the serial transfer of control and user data from and to serial interfaces (4,8) of the GSM-R mobile wireless devices (5,9) takes place by way of TTY bridges (47,48).

8. Method according to one of the preceding claims,
**characterised in that**
the scope of the encapsulated protocols is expanded by further protocol layers for packet-oriented communication.

9. Method according to one of the preceding claims,
**characterised in that**
gateway functions (15,16;39,40) and/or diagnostic functions are integrated into the capsules (K1,K2;K3,K4).

10. Method according to one of the preceding claims,
**characterised in that**
the protocols running in the capsules 3G 27.010, PPP and TCP/IP for the packet-oriented data transfer are switched to transparent when using connection-oriented data services.

11. Method according to one of the preceding claims,
**characterised in that**
one of the two GSM-R mobile wireless devices is actuated in the conventional manner without capsules.

12. ETCS (European Train Control System) railway vehicle with at least two GSM-R mobile wireless devices (5,9) connected to an ETCS control computer (2) of the railway vehicle with a packet-oriented data transfer with the EURORADIO protocols 3G TS 27.010 (21,22), the multiplex layer for modem actuation, PPP (19,20), the network protocol, and TCP/IP (17,18), the IP-based error-correcting transfer protocol,
**characterised in that**
the ETCS railways vehicle is suitable for encapsulating the actuation of the at least two GSM-R mobile wireless devices (5,9) by way of the ETCS control computer (2) with the EURORADIO protocols 3G 27.010 (21,22), PPP (19,20) and TCP/IP (17,18), wherein for each GSM-R mobile wireless device (5,9) at least the EURORADIO protocols 3G 27.010 (21,22), PPP (19,20) and TCP/IP (17,18) run in the ETCS control computer (2) in a virtual runtime environment provided for this purpose acting as a virtual machine (11,12) with the running TCP/IP protocols (17,18) being isolated from a protocol-related perspective.

13. ETCS (European Train Control System) railway vehicle with at least two GSM-R mobile wireless devices (5,9) connected to an ETCS control computer (36) of the ETCS railway vehicle with a packet-oriented data transfer with the EURORADIO protocols 3G TS 27.010 (45,46), the multiplex layer for modem actuation, PPP (43,44), the network protocol, and TCP/IP (41,42), the IP-based error-correcting transfer protocol,
**characterised in that**
the ETCS railway vehicle is suitable for encapsulating (K3,K4) the actuation of the at least two GSM-R mobile wireless devices (5,9) by way of the ETCS control computer (36) with the EURORADIO protocols 3G 27.010 (45,46), PPP (43,44) and TCP/IP (41,42), wherein for each GSM-R mobile wireless device (5,9) at least the EURORADIO protocols 3G 27.010 (45,46), PPP (43,44) and TCP/IP (41,42) run in two microcomputers (28,29) coupled to the ETCS control computer (36) with the running TCP/IP protocols (41,42) being isolated from a protocol-related perspective.

## Revendications

1. Procédé pour faire fonctionner un véhicule ferroviaire ETCS (European Train Control System) ayant au moins deux appareils (5, 9) radiotéléphoniques mobiles GSM-R raccordés à un ordinateur (2) de commande ETCS du véhicule ferroviaire, lors d'une transmission de données par paquets avec les programmes EURORADIO 3G TS 27.010 (21,22) de la couche de multiplexage pour la commande de mode, le programme de réseau PPP (19,20) et le programme de transmission TCP/IP (17,18) à correction d'erreur basée sur IP,
**caractérisé en ce que**
on encapsule la commande des au moins deux appareils (5,9) de radiotéléphonie mobile GSM-R par l'ordinateur (2) de commande ETCS avec les programmes EURORADIO 3G 27.010 (21,22), PPP (19,20) et TCP/IP (17,18), dans lequel chaque appareil (5,9) de radiotéléphonie mobile GSM-R fait se dérouler au moins les programmes EURORADIO 3G 27.010 (21,22), PPP (19,20) et TCP/IP (17,18) dans un environnement de déroulement virtuel mis à disposition dans l'ordinateur (2) de commande ETCS, sous la forme d'une machine (11,12) virtuelle avec un découplage en technique de programme du programme TCP/IP (17,18), qui se déroule.

2. Procédé suivant la revendication 1,
**caractérisé en ce que**
l'on réalise l'encapsulation effectuée dans l'ordinateur de commande ETCS des programmes EURORADIO 3G 27.010, PPP et TCP/IP en utilisant des espaces de dénomination de réseau LINUX.

3. Procédé suivant la revendication 1 ou 2,
**caractérisé en ce que**
l'on utilise l'encapsulation avec des systèmes de fonctionnement et des fonctionnalités de programme différents pour les deux appareils de radiotéléphonie mobiles GSM-R.

4. Procédé suivant l'une des revendications précédentes,
**caractérisé en ce que**,
pour la formation de la capsule, on met une micro-unité de commande à disposition d'un autre appareil de radiotéléphonie mobile GSM-R.

5. Procédé suivant la revendication 3,
**caractérisé en ce que**
le couplage des capsules (K1, K2) à l'ordinateur (2) de commande ETCS s'effectue par un bridge (13, 14) LAN ou TTY.

6. Procédé pour faire fonctionner un véhicule ferroviaire ETCS (European Train Control System) ayant au moins deux appareils (5, 9) radiotéléphoniques mobiles GSM-R raccordés à un ordinateur (2) de commande ETCS du véhicule ferroviaire, lors d'une transmission de données par paquets avec les programmes EURORADIO 3G TS 27.010 (45,46) de la couche de multiplexage pour la commande de mode, le programme de réseau PPP (43,44) et le programme de transmission TCP/IP (41,42) à correction d'erreur basée sur IP,
**caractérisé en ce que**
l'on encapsule (K3, K4) la commande des au moins deux appareils (5, 9) de radiotéléphonie mobile GSM-R par l'ordinateur (36) de commande ETCS avec les programmes EURORADIO 3G 27.010 (45,46), PPP (43,44) et TCP/IP
(41,42), dans lequel chaque appareil (5, 9) de radiotéléphonie mobile GSM-R fait se dérouler au moins les programmes EURORADIO 3G 27.010 (45,46), PPP (43,44) et TCP/IP (41, 42) dans deux micro-ordinateurs (30, 31) couplés à l'ordinateur (36) de commande ETCS avec un découplage en technique de programme des protocoles TCP/IP (41,42), qui se déroulent.

7. Procédé suivant l'une des revendications précédentes,
**caractérisé en ce que**
la transmission série de données de commande et d'utilisateurs de et à des interfaces (4, 8) série des appareils (5, 9) de radiotéléphonie mobile GSM-R s'effectue par des bridges TTY (47,48).

8. Procédé suivant l'une des revendications précédentes,
**caractérisé en ce que**
l'on étend la dimension des programmes encapsulés d'autres couches de programme pour une communication par paquets.

9. Procédé suivant l'une des revendications précédentes,
**caractérisé en ce que**
l'on intègre des fonctions (15, 16 ; 39, 40) de gateway et/ou des fonctions de diagnostic dans les capsules (K1, K2 ; K3, K4).

10. Procédé suivant l'une des revendications précédentes,
**caractérisé en ce que**
l'on rend transparents les programmes 3G 27.010, PPP et TCP/IP se déroulant dans les capsules pour la transmission de données par paquets lors de l'utilisation de services de données par liaison.

11. Procédé suivant l'une des revendications précédentes,
**caractérisé en ce que**
l'on commande, à la manière habituelle sans capsule, l'un des deux appareils de radiotéléphonie mobile GSM-R.

12. Véhicule ferroviaire ETCS (European Train Control System), ayant au moins deux appareils (5, 9) radiotéléphoniques mobiles GSM-R raccordés à un ordinateur (2) de commande ETCS du véhicule ferroviaire, lors d'une transmission de données par paquets avec les programmes EURORADIO 3G TS 27.010 (21,22) de la couche de multiplexage pour la commande de mode, le programme de réseau PPP (19,20) et le programme de transmission TCP/IP (17,18) à correction d'erreur basée sur IP,
**caractérisé en ce que**
le véhicule ferroviaire ETCS est propre à encapsuler la commande des au moins deux appareils (5, 9) de radiotéléphonie mobile GSM-R par l'ordinateur (2) de commande ETCS avec les programmes EURORADIO 3G 27.010 (21,22), ppp (19,20) et TCP/IP (17,18), dans lequel chaque appareil (5,9) de radiotéléphonie mobile GSM-R fait se dérouler au moins les programmes EURORADIO 3G 27.010 (21,22), PPP (19,20) et TCP/IP (17,18) dans un environnement de déroulement virtuel mis à disposition dans l'ordinateur (2) de commande ETCS, sous la forme d'une machine (11,12) virtuelle avec un découplage en technique de programme du programme TCP/IP (17,18), qui se déroule.

13. Véhicule ferroviaire ETCS (European Train Control System), comprenant au moins deux appareils (5, 9) radiotéléphoniques mobiles GSM-R raccordés à un ordinateur (2) de commande ETCS du véhicule ferroviaire, lors d'une transmission de données par paquets avec les programmes EURORADIO 3G TS 27.010 (45,46) de la couche de multiplexage pour la commande de mode, le programme de réseau PPP (43,44) et le programme de transmission TCP/IP (41,42) à correction d'erreur basée sur IP,
**caractérisé en ce que**
le véhicule ferroviaire ETCS est propre à encapsuler (K3, K4) les au moins deux appareils (5, 9) de radiotéléphonie mobile GSM-R par l'ordinateur (36) de commande ETCS avec les programmes EURORADIO 3G 27.010 (45,46), PPP (43,44) et TCP/IP(41,42), dans lequel chaque appareil (5, 9) de radiotéléphonie mobile GSM-R fait se dérouler au moins les programmes EURORADIO 3G 27.010 (45,46), PPP (43,44) et TCP/IP (41, 42) dans deux micro-ordinateurs (30, 31) couplés à l'ordinateur (36) de commande ETCS avec un découplage en technique de programme des protocoles TCP/IP (41,42), qui se déroulent.
